# FASCICULE DE BREVET EUROPEEN

(11) **EP 4 090 842 B1**
(45) Date de publication et mention de la délivrance du brevet: **15.01.2025**
(21) Numéro de dépôt: 21709084.4
(22) Date de dépôt: 17.02.2021
(51) Int. Cl.: F02C 7/14, F01D 25/18, F01M 1/20, F02C 7/224

(54) **ISOLEMENT D'UN ECHANGEUR THERMIQUE DE TURBOMACHINE EN CAS DE FUITE PAR UN DISTRIBUTEUR ELECTRIQUE ET HYDROMECANIQUE**
ISOLIERUNG EINES WÄRMETAUSCHERS EINES TURBINENTRIEBWERKS IM FALLE EINES LECKS AN EINEM ELEKTRISCHEN UND MECHANISCHEN HYDRAULIKREGELVENTIL
ISOLATION OF A TURBINE ENGINE HEAT EXCHANGER IN THE EVENT OF A LEAK FROM AN ELECTRICAL AND MECHANICAL HYDRAULIC CONTROL VALVE

(30) Priorité: 21.02.2020 FR 2001739
(43) Date de publication de la demande: 23.11.2022
(73) Titulaire: SAFRAN AIRCRAFT ENGINES, 75015 Paris (FR)
(72) Inventeur: ORIOL, Sébastien, 77550 MOISSY-CRAMAYEL (FR); BOUTALEB, Mohammed-Lamine, 77550 MOISSY-CRAMAYEL (FR); COTEREAU, Nicolas, Vincent, Pierre-Yves, 77550 MOISSY-CRAMAYEL (FR)
(74) Mandataire: Brevalex
(86) Numéro de dépôt international: PCT/FR2021/050271
(87) Numéro de publication internationale: WO 2021/165611

(56) Documents cités:
- WO-A1-2016/156743
- FR-A1- 3 001 253
- FR-A1- 3 027 624
- US-A1- 2008 234 903
- US-A1- 2012 055 559

## Description

### DOMAINE TECHNIQUE

L'invention se rapporte au domaine technique général des turbomachines d'aéronef telles que les turboréacteurs et les turbopropulseurs. Plus précisément, elle concerne l'isolement d'un échangeur thermique qui est situé dans un aubage de stator de turbomachine, en cas de fuite.

### ÉTAT DE LA TECHNIQUE ANTÉRIEURE

Il existe des turbomachines qui comprennent des échangeurs thermiques air/huile pour refroidir de l'huile au contact d'air ambiant. Ces échangeurs ne fonctionnent que durant certains régimes de la turbomachine, pour éviter de trop refroidir l'huile dans des conditions froides de vol ou bien pour éviter la rétention d'huile dans des enceintes de lubrification de turbomachine en régime de croisière de la turbomachines.

Certains circuits de lubrification comprennent un clapet thermostatique avec de la cire solide à basse température, pour dériver du lubrifiant lorsque la température du lubrifiant est inférieure à une valeur seuil. Néanmoins, ces clapets thermostatiques ne permettent pas d'arrêter complètement l'alimentation en huile de l'échangeur. Ils ne peuvent pas non plus subir un nombre important de cycles d'ouverture/fermeture.

Des circuits de lubrification comprennent un clapet hydraulique qui est configuré pour s'ouvrir lorsqu'une différence de pression du lubrifiant dépasse une deuxième valeur seuil, pour dériver du lubrifiant lorsque la température du lubrifiant devient inférieure à une première valeur seuil et que la circulation de lubrifiant froid engendre des pertes de charges plus importantes dans le circuit hydraulique. Cependant, ces clapets hydrauliques ne permettent pas d'arrêter complétement l'alimentation en huile de l'échangeur. Par ailleurs, le fonctionnement de ces clapets hydrauliques est instable, ce qui rend difficile leur utilisation dans un circuit de lubrification.

Certains de ces échangeurs thermiques air/huile sont situés dans des secteurs d'aubage de stator et ils sont agencés en parallèle. L'huile qui circule dans chaque échangeur est refroidie par de l'air qui vient au contact du secteur d'aubage de stator de la turbomachine.

Une telle turbomachine est par exemple connue de la demande WO 2016/156743 de la société Snecma.

Néanmoins, les aubes d'un secteur d'aubage de stator peuvent être endommagées, par exemple en cas d'impact avec un corps étranger à la turbomachine, ce qui peut conduire à des fuites d'huile relativement importantes dans les échangeurs qui sont logés dans ces aubes. Si ces fuites continuent, la quantité d'huile s'échappant du circuit de lubrification de la turbomachine peut devenir telle que la quantité insuffisante d'huile restante entraine une extinction de la turbomachine en vol. La demande FR3001253A1 divulgue un ensemble pour circuit de fluide de turbomachine selon l'art antérieur.

### EXPOSÉ DE L'INVENTION

L'invention vise à résoudre au moins partiellement les problèmes rencontrés dans les solutions de l'art antérieur.

A cet égard, l'invention a pour objet un ensemble pour circuit de fluide de turbomachine. L'ensemble comprend une branche principale qui comporte un échangeur thermique.

Selon l'invention, l'ensemble comporte un distributeur de fluide vers l'échangeur thermique. Le distributeur de fluide comprend une entrée de fluide, une sortie principale de fluide, une sortie de dérivation de fluide, un obturateur, un moyen élastique de sollicitation de l'obturateur, et un moyen de commande électrique de l'obturateur.

La sortie principale de fluide est raccordée fluidiquement à la branche principale. La sortie de dérivation de fluide est raccordée fluidiquement à une branche de dérivation qui est agencée en parallèle de la branche principale. L'obturateur est mobile entre une position principale d'ouverture dans laquelle il obture la sortie de dérivation et il laisse circuler du fluide dans la branche principale, et une position de dérivation dans laquelle il obture la sortie principale et il laisse circuler du fluide dans la branche de dérivation.

Le moyen élastique de sollicitation de l'obturateur est configuré pour solliciter le déplacement de l'obturateur pour qu'il obture la sortie principale lorsqu'une valeur de pression de fluide est inférieure à une première valeur seuil. Le moyen de commande électrique de l'obturateur est configuré pour solliciter le déplacement de l'obturateur vers la position principale d'ouverture ou la position de dérivation.

Grâce au distributeur de fluide de l'ensemble selon l'invention, le débit et le refroidissement du fluide sont aptes à être commandés et adaptés en fonction du régime de la turbomachine, tout en limitant l'impact de fuites dans la branche principale et en facilitant la détection de fuite dans la branche principale.

L'obturateur se déplace notamment automatiquement vers la position de dérivation par une commande hydromécanique, ce qui limite l'intervention d'un système de régulation numérique de turbomachine pour isoler l'échangeur thermique en cas de fuite de l'échangeur thermique.

En particulier, la pression du fluide dans la branche principale en amont de l'échangeur thermique est comparée à la première valeur seuil. Il s'agit par exemple de la pression du fluide en entrée du distributeur de fluide.

L'invention peut comporter de manière facultative une ou plusieurs des caractéristiques suivantes combinées entre elles ou non.

L'ensemble comprend notamment un secteur aubagé de stator, l'échangeur thermique étant situé dans le secteur aubagé de stator.

Selon une particularité de réalisation, le moyen de commande électrique de l'obturateur comprend un premier organe de commande électrique de l'obturateur qui est configuré pour solliciter l'obturateur vers la position principale d'ouverture, notamment lorsque la valeur de pression du fluide est inférieure à la première valeur seuil.

En particulier, le premier organe de commande électrique permet d'alimenter l'échangeur en fluide lors du démarrage de la turbomachine.

Selon une autre particularité de réalisation, le moyen de commande électrique de l'obturateur comprend un deuxième organe de commande électrique de l'obturateur qui est configuré pour solliciter l'obturateur vers la position de dérivation, notamment lorsque la température du fluide est inférieure à une deuxième valeur seuil.

Le deuxième organe de commande électrique de l'obturateur est par exemple configuré pour arrêter l'alimentation en fluide de l'échangeur, alors que la pression du fluide est supérieure à la première valeur seuil, lorsque la température du fluide est anormalement basse. Une telle situation peut se produire en régime de croisière de la turbomachine.

Selon une particularité de réalisation, le distributeur de fluide comprend une première chambre et une deuxième chambre qui sont séparées l'une de l'autre par l'obturateur. Le distributeur de fluide comprend une entrée de pressurisation pour amener du fluide dans la première chambre. Le moyen élastique de sollicitation comprend un ressort de rappel qui est configuré pour solliciter le déplacement de l'obturateur vers la position de dérivation à l'encontre de la pression du fluide dans la première chambre.

Ce ressort de rappel peut être un ressort de traction situé dans la première chambre ou un ressort de compression situé dans la deuxième chambre.

Selon une autre particularité de réalisation, la branche principale comprend un dispositif anti-retour qui est configuré pour limiter/empêcher la circulation de fluide vers l'échangeur thermique lorsque l'obturateur est dans la position de dérivation.

De préférence, le dispositif anti-retour comprend un clapet anti-retour.

Selon une particularité de réalisation, la branche de dérivation comprend un élément résistif hydraulique qui est conçu pour qu'une valeur de résistance hydraulique dans la branche de dérivation soit sensiblement égale à une valeur de résistance hydraulique dans la branche principale.

De préférence, l'élément résistif hydraulique comprend un diaphragme.

Selon une autre particularité de réalisation, l'obturateur du distributeur de fluide est dans la position principale d'ouverture lorsqu'une température du fluide est supérieure à la deuxième valeur seuil, lorsqu'une valeur de rotation d'un arbre de turbomachine est supérieure à une troisième valeur seuil, et qu'aucune fuite de fluide n'est détectée dans la branche principale.

La valeur de rotation de l'arbre de turbomachine peut déterminer la pression du fluide de l'ensemble et être mesurée indépendamment de l'ensemble.

Selon une autre particularité de réalisation, l'obturateur du distributeur de fluide est dans la position de dérivation lorsque la température du fluide est strictement inférieure à la deuxième valeur seuil, ou lorsque la valeur de rotation d'un arbre de turbomachine est strictement inférieure à la troisième valeur seuil, ou lorsqu'une fuite de fluide est détectée dans la branche principale.

Selon une particularité de réalisation, la position de l'obturateur du distributeur de fluide est commandée par une commande électrique en régime transitoire du distributeur de fluide.

Selon une particularité de réalisation, la position de l'obturateur du distributeur de fluide est commandée par une commande hydromécanique en régime stable du distributeur de fluide.

La commande électrique de la position de l'obturateur permet notamment de limiter les instabilités de position de l'obturateur lors d'un régime transitoire de position de l'obturateur du distributeur de fluide. De plus, le système de régulation numérique n'est susceptible d'être sollicité que lors du fonctionnement normal de la turbomachine pour commander le déplacement de l'obturateur et seulement pour une courte durée.

La commande hydromécanique de position de l'obturateur est passive, c'est-à-dire qu'elle fonctionne automatiquement sans intervention d'une unité de commande électronique ou d'un système de régulation numérique.

Selon une autre particularité de réalisation, le distributeur de fluide comprend une position de sécurité dans laquelle l'obturateur est dans la position de dérivation, l'obturateur étant bloqué dans la position de sécurité lorsque l'obturateur s'est déplacé de la position principale d'ouverture vers la position de dérivation par une commande hydromécanique de l'obturateur.

Selon une particularité de réalisation, l'ensemble comprend un détecteur de fuite configuré pour détecter une fuite dans la branche principale, lorsque l'obturateur du distributeur du fluide se déplace depuis la position principale d'ouverture vers la position de dérivation et en l'absence de commande électrique de déplacement de l'obturateur vers la position de dérivation.

Selon une autre particularité de réalisation, l'ensemble comprend un secteur aubagé de stator, l'échangeur thermique étant situé dans le secteur aubagé de stator.

De préférence, le secteur aubagé de stator comporte des aubes de redressement d'un flux secondaire de turbomachine,

De préférence, le secteur aubagé comprend une plateforme radialement interne, une plateforme radialement externe et au moins une pale qui s'étend entre la plateforme radialement interne et la plateforme radialement externe.

Le distributeur permet alors de limiter une fuite lors d'un impact d'un corps extérieur à la turbomachine avec l'aube et lorsque l'échangeur thermique à l'intérieur de l'aube est endommagé.

L'invention porte également sur un circuit de fluide pour turbomachine. Le circuit de fluide comprend un premier ensemble pour turbomachine tel que défini ci-dessus et un deuxième ensemble tel que défini ci-dessus et qui est agencé fluidiquement en parallèle du premier ensemble.

Selon une particularité de réalisation, le fluide est du lubrifiant. Le circuit de fluide comprend une pompe d'alimentation en lubrifiant et une enceinte de lubrification de la turbomachine, chaque ensemble de transfert thermique étant situé fluidiquement entre la pompe d'alimentation en lubrifiant et l'enceinte de lubrification.

L'invention se rapporte aussi à une turbomachine comprenant un ensemble tel que défini ci-dessus ou un circuit de fluide tel que défini ci-dessus. La turbomachine est notamment une turbomachine d'aéronef. La turbomachine est de préférence un turboréacteur à double flux.

### BRÈVE DESCRIPTION DES DESSINS

La présente invention sera mieux comprise à la lecture de la description d'exemples de réalisation, donnés à titre purement indicatif et nullement limitatif, en faisant référence aux dessins annexés sur lesquels :
- la figure 1 est une représentation schématique partielle en coupe longitudinale d'une turbomachine pour aéronef, selon un premier mode de réalisation préféré;
- la figure 2 est une représentation schématique partielle d'un circuit de lubrification pour la turbomachine selon le premier mode de réalisation, au démarrage de la turbomachine ;
- la figure 3 est une représentation schématique partielle du circuit de lubrification pour la turbomachine selon le premier mode de réalisation, dans un régime de refroidissement du lubrifiant de la turbomachine ;
- la figure 4a est une représentation schématique partielle d'un ensemble d'échange thermique du circuit de lubrification dans un premier régime transitoire au démarrage de la turbomachine ;
- la figure 4b est une représentation schématique partielle d'un ensemble d'échange thermique du circuit de lubrification après le démarrage de la turbomachine ;
- la figure 4c est une représentation schématique partielle d'un ensemble d'échange thermique du circuit de lubrification lors d'un deuxième régime transitoire de l'ensemble d'échange thermique ;
- la figure 4d est une représentation schématique partielle d'un ensemble d'échange thermique du circuit de lubrification dans un régime de croisière de la turbomachine ;
- la figure 4e est une représentation schématique partielle d'un ensemble d'échange thermique du circuit de lubrification lors d'un troisième régime transitoire de l'ensemble d'échange thermique ;
- la figure 4f est une représentation schématique partielle d'un ensemble d'échange thermique du circuit de lubrification dans un régime de perte de charge anormale dans l'ensemble d'échange thermique ;
- la figure 5 est une représentation schématique partielle du circuit de lubrification pour la turbomachine selon le premier mode de réalisation, dans un régime de perte de charge anormale dans un des ensembles d'échange thermique du circuit de lubrification ;
- la figure 6 illustre un procédé de commande de la position de l'obturateur d'un distributeur de fluide du circuit de lubrification à partir de paramètres de la turbomachine ;
- la figure 7 illustre un procédé de commande de la position de l'obturateur d'un distributeur de fluide du circuit de lubrification à partir de la position de l'obturateur et d'une commande de position de l'obturateur.

### EXPOSÉ DÉTAILLÉ DE MODES DE RÉALISATION PARTICULIERS

Des parties identiques, similaires ou équivalentes des différentes figures portent les mêmes références numériques de façon à faciliter le passage d'une figure à l'autre.

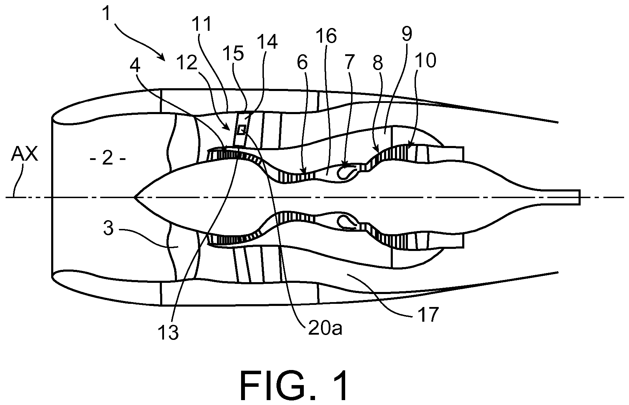

La figure 1 représente une turbomachine 1 à double flux et double corps. La turbomachine 1 est un turboréacteur qui a une forme de révolution autour d'un l'axe longitudinal AX.

La turbomachine 1 comprend, sur le chemin d'une veine primaire 16 d'un flux primaire, une manche d'entrée d'air 2, une soufflante 3, un compresseur basse pression 4, un compresseur haute pression 6, une chambre de combustion 7, une turbine haute pression 8 et une turbine basse pression 10.

Une direction radiale est une direction orthogonale à l'axe longitudinal AX et sécante avec cet axe. Une direction circonférentielle est définie comme une direction localement orthogonale à une direction radiale et à la direction de l'axe longitudinal AX.

De manière générale, le terme « air » désigne tout gaz susceptible de servir de comburant dans la turbomachine 1.

Le compresseur basse pression 4, le compresseur haute pression 6, la turbine haute pression 8 et la turbine basse pression 10 délimitent une veine secondaire 17 d'écoulement d'un flux secondaire qui les contourne.

Le compresseur haute pression 6 et la turbine haute pression 8 sont reliées mécaniquement par un arbre d'entraînement du compresseur haute pression 6, de sorte à former un corps haute pression de la turbomachine 1. De manière similaire, le compresseur basse pression 4 et la turbine basse pression 10 sont reliées mécaniquement par un arbre de turbomachine 1, de façon à former un corps basse pression de la turbomachine 1.

Le compresseur basse pression 4, le compresseur haute pression 6, la chambre de combustion 7, la turbine haute pression 8 et la turbine basse pression 10 sont entourés par un carénage interne 9 qui s'étend depuis la manche d'entrée 2 jusqu'à la turbine basse pression 10.

Ce carénage interne 9 est entouré par un carter externe 11 qui délimite la turbomachine radialement vers l'extérieur par rapport à l'axe longitudinal AX. Le carter externe 11 délimite radialement vers l'extérieur la veine secondaire 17, notamment au niveau de la soufflante 3.

La turbomachine 1 comprend au moins un premier secteur aubagé 12 et un deuxième secteur aubagé 12 qui s'étendent chacun entre le carénage interne 9 et le carter externe 11. Les secteurs aubagés 12 sont des secteurs aubagés de stator.

Les secteurs aubagés 12 comprennent chacun une plateforme radialement interne 13, une plateforme radialement externe 15 et au moins une aube 14 entre la plateforme radialement interne 13 et la plateforme radialement externe 15.

La plateforme radialement interne 13 de chaque secteur aubagé 12 est rigidement solidaire du carénage interne 9. Elle est délimitée radialement vers l'extérieur par une première surface aérodynamique qui est au contact de l'air de la veine secondaire 17.

La plateforme radialement externe 15 de chaque secteur aubagé 12 est rigidement solidaire du carter externe 11. Elle est délimitée radialement vers l'intérieur par une deuxième surface aérodynamique qui est au contact de l'air de la veine secondaire 17.

Les aubes 14 de chaque secteur aubagé 12 s'étendent radialement depuis la plateforme radialement interne 13 jusqu'à la plateforme radialement externe 15. Ces aubes 14 sont espacés les unes des autres selon une direction circonférentielle du secteur aubagé 12. Dans le mode de réalisation représenté, chacune des aubes 14 est une aube de redressement du flux secondaire de la turbomachine.

Une première aube 14 du premier secteur aubagé 12 loge un premier échangeur thermique 20a. Dans le mode de réalisation représente, cette première aube 14 loge également un premier distributeur hydraulique 70a et un premier dispositif anti-retour 30a.

Une deuxième aube 14 du deuxième secteur aubagé 12 loge un deuxième échangeur thermique 20b. Dans le mode de réalisation représente, cette deuxième aube 14 loge également un deuxième distributeur hydraulique 70b et un deuxième dispositif anti-retour 30b.

Une troisième aube 14 d'un des secteurs aubagés 12 loge un troisième échangeur thermique 20c. Dans le mode de réalisation représente, cette troisième aube 14 loge également un troisième distributeur hydraulique 70c et un troisième dispositif anti-retour 30c.

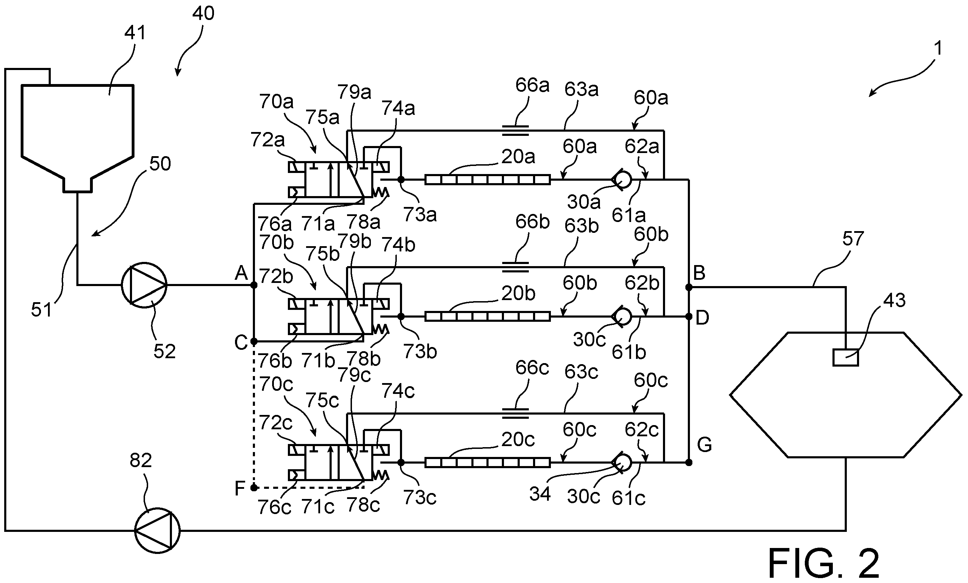

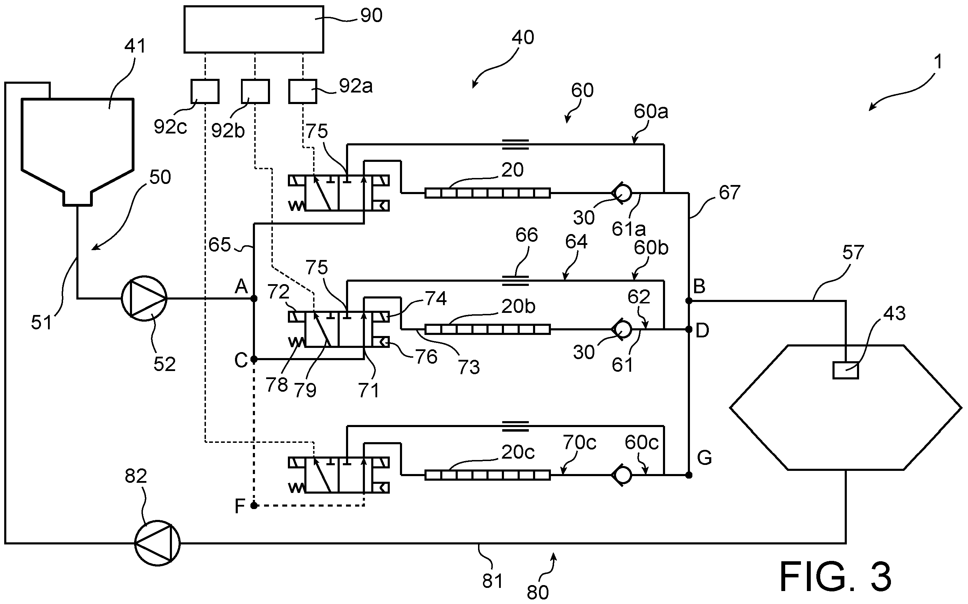

En référence à la figure 2 et à la figure 3, la turbomachine 1 comprend un circuit de fluide 40. Dans le mode de réalisation représenté, le fluide est du lubrifiant, typiquement de l'huile. Le circuit de fluide 40 est alors un circuit de lubrification.

Le circuit de lubrification 40 comprend un réservoir 41, un circuit d'alimentation 50 en lubrifiant, au moins une enceinte de lubrification 43 et un circuit de retour 80 de lubrifiant. Le circuit de lubrification 40 est configuré pour faire circuler du lubrifiant en boucle fermée entre le circuit d'alimentation 50 et le circuit de retour 80.

L'enceinte de lubrification 43 est une enceinte à l'intérieur de laquelle du lubrifiant est utilisé pour lubrifier et/ou refroidir des composants (non représentés) de la turbomachine 1, tels que des arbres et/ou des roulements. L'enceinte de lubrification 43 est typiquement une chambre de lubrification de palier de la turbomachine 1.

Le circuit de retour 80 de lubrifiant est configuré pour faire circuler du lubrifiant depuis chaque enceinte de lubrification 43 jusqu'au réservoir 41. Il comprend une pompe de retour 82 et un conduit de retour 81.

La pompe de retour 82 est par exemple une pompe volumétrique ou centrifuge qui est configurée pour délivrer du lubrifiant en provenance l'enceinte de lubrification 43 vers le réservoir 41, à travers le conduit de retour 81.

Le circuit d'alimentation 50 en lubrifiant comprend d'amont en aval un conduit amont 51, une pompe d'alimentation 52, un circuit de refroidissement 54, et un conduit de distribution 57.

De manière générale, les directions amont et aval sont utilisées dans le présent document en référence à la direction globale d'écoulement global du fluide dans le circuit de fluide 40.

La pompe d'alimentation 52 est par exemple une pompe volumétrique ou centrifuge qui est configurée pour délivrer du lubrifiant en provenance du réservoir 41 vers l'enceinte de lubrification 43, à travers le conduit amont 51.

Le conduit amont 51 comprend une ou plusieurs conduites. Il relie fluidiquement le réservoir 41 au circuit de refroidissement 54.

Le conduit de distribution 57 comprend une ou plusieurs conduites. Il relie fluidiquement le circuit de refroidissement 54 à l'enceinte de lubrification 43.

Le circuit de refroidissement 54 comprend un premier ensemble thermique 60a, un deuxième ensemble thermique 60b et au moins un troisième ensemble thermique 60c qui sont agencés deux à deux en parallèle.

Le premier ensemble thermique 60a est raccordé fluidiquement par un premier noeud d'entrée A au conduit amont 51 et il est raccordé fluidiquement par un premier noeud de sortie B au conduit de distribution 57. Le deuxième ensemble thermique 60b est raccordé fluidiquement par un deuxième noeud d'entrée C au conduit amont 51 et il est raccordé fluidiquement par un deuxième noeud de sortie D au conduit de distribution 57. Le troisième ensemble thermique 60c est raccordé fluidiquement par un troisième noeud d'entrée F au conduit amont 51 et il est raccordé fluidiquement par un troisième noeud de sortie G au conduit de distribution 57.

Dans le mode de réalisation représenté, les noeuds d'entrée A, C, F sont sensiblement confondus et les noeuds de sortie B, D, G sont sensiblement confondus.

Dans le présent exposé, les ensembles d'échange thermique 60 sont chacun de structure identique. Leurs éléments constitutifs ont les mêmes références numériques, avec la lettre supplémentaire a en référence spécifiquement au premier ensemble d'échange thermique 60a, avec la lettre supplémentaire b en référence spécifiquement au deuxième ensemble d'échange thermique 60b, et avec la lettre supplémentaire c en référence spécifiquement au troisième ensemble d'échange thermique 60c.

Chaque ensemble thermique 60 comprend un conduit d'entrée 65, une branche principale 62, une branche de dérivation 64, un distributeur hydraulique 70, et un conduit de sortie 67.

Le conduit d'entrée 65 de chacun des ensembles thermiques 60 est raccordé au conduit amont 51 par son noeud d'entrée. Le conduit de sortie 67 de chacun des ensembles thermiques 60 est raccordé au conduit de distribution 57 par son noeud de sortie. La branche principale 62 et la branche de dérivation 64 sont agencée en parallèle l'une de de l'autre, en étant raccordée chacune au conduit d'entrée 65 et au conduit de sortie 67.

La branche principale 62 de chacun des ensembles thermiques 60 comprend d'amont en aval un des échangeurs thermiques 20 et un dispositif anti-retour 30 qui sont reliés fluidiquement par un conduit de principal 61.

Chacun des échangeurs thermiques 20 est configuré pour refroidir le lubrifiant de la branche principale 62 au contact de l'air qui circule autour des aubes 14 de stator dans la veine secondaire 17.

Chaque dispositif anti-retour 30 comprend un clapet anti-retour dans le mode de réalisation représenté. Le dispositif anti-retour 30 est configuré pour limiter/empêcher la circulation de fluide à travers l'échangeur thermique 20, lorsque l'obturateur 79 du distributeur hydraulique 70 est dans la position de dérivation pour diriger le lubrifiant vers la branche de dérivation 64.

La branche de dérivation 64 de chacun des ensembles thermiques 60 comprend un élément résistif hydraulique 66 et un conduit de dérivation 63.

De manière générale, l'élément résistif hydraulique 66 est conçu pour qu'une valeur de résistance hydraulique dans la branche de dérivation 64 soit sensiblement égale à une valeur de résistance hydraulique dans la branche principale 62.

Dans le présent exposé, une résistance hydraulique d'un élément du circuit de lubrification 40 est définie, par analogie avec le domaine de l'électricité, comme la grandeur du rapport entre la perte de charges à travers cet élément sur le débit de lubrifiant traversant cet élément. Par métonymie et toujours par analogie avec le domaine de l'électricité, une résistance hydraulique ou élément résistif hydraulique correspond à un élément du circuit de lubrification 40 qui est caractérisé par la valeur de sa résistance hydraulique.

Dans le mode de réalisation représenté, l'élément résistif hydraulique 66 comprend un diaphragme. Le circuit de lubrification 40 comprend un premier diaphragme 66a, un deuxième diaphragme 66b et un troisième diaphragme 66c.

Chaque distributeur hydraulique 70 est également appelé ou distributeur 70 de fluide dans le présent exposé. Il comprend une entrée principale 71 de lubrifiant, une entrée de pressurisation 77, un obturateur 79, un moyen de commande de l'obturateur, une sortie principale 73, et une sortie de dérivation 75.

Le distributeur 70 de lubrifiant comprend une première chambre et une deuxième chambre qui sont séparées l'une de l'autre par l'obturateur 79 qui est un tiroir dans le mode de réalisation représenté. Le moyen de commande comprend notamment un ressort de rappel qui peut être un ressort de traction situé dans la première chambre et/ou un ressort de compression situé dans la deuxième chambre, pour solliciter le déplacement de l'obturateur 79 à l'encontre de la pression du lubrifiant dans la première chambre.

L'obturateur 79 est mobile entre une position principale d'ouverture et une position de dérivation. Dans le mode de réalisation représenté, chaque distributeur hydraulique 70 est bistable. La position principale d'ouverture est une première position stable d'ouverture de l'obturateur 79 et la position de dérivation est une deuxième position d'ouverture stable de l'obturateur 79.

Dans la position principale d'ouverture, l'obturateur 79 obture la sortie de dérivation 75 et il laisse circuler du fluide dans la branche principale 62 à travers la sortie principale 73. Dans la position de dérivation, l'obturateur 79 obture la sortie principale 73 et il laisse circuler du fluide dans la branche de dérivation 64 à travers la sortie de dérivation 75.

Le distributeur 70 de lubrifiant comprend une position de sécurité dans laquelle l'obturateur 79 est bloqué, lorsque l'obturateur 79 s'est déplacé de la position principale d'ouverture vers la position de dérivation par une commande hydromécanique de l'obturateur 79. La position de sécurité de l'obturateur 79 est la position de dérivation.

L'entrée principale 71 de chaque distributeur hydraulique est raccordée fluidiquement au conduit d'entrée 65 de l'ensemble d'échange thermique 60 correspondant.

En référence conjointe aux figures 2 à 5, l'entrée de pressurisation 77 est raccordée fluidiquement par un conduit de pressurisation 69 au conduit d'entrée 65 de l'ensemble d'échange thermique 60. L'entrée de pressurisation 77 est conçue pour amener du fluide dans la première chambre du distributeur hydraulique 70. Le conduit de pressurisation 69 est conçu pour effectuer un piquage de pression du lubrifiant. La pression du lubrifiant à l'entrée de pressurisation 77 est notamment sensiblement identique à celle de l'entrée principale 71.

La sortie principale 73 de fluide est raccordée fluidiquement à la branche principale 62 en amont de l'échangeur thermique 20 et du dispositif anti-retour 30.

La sortie de dérivation 75 de fluide est raccordée fluidiquement à la branche de dérivation 64 en amont de l'élément résistif hydraulique 66.

En référence conjointe aux figures 2 à 5, le moyen de commande de chaque obturateur 79 comprend un moyen de commande électrique 72, 74 de l'obturateur, un moyen élastique de sollicitation 78 de l'obturateur, et un moyen de commande hydraulique 76 de l'obturateur.

Le moyen élastique de sollicitation 78 de l'obturateur et le moyen de commande hydraulique 76 de l'obturateur commandent le déplacement de l'obturateur 79 en régime stable du distributeur hydraulique 70.

Le moyen élastique de sollicitation 78 de l'obturateur comprend le ressort de rappel qui est configuré pour solliciter le déplacement de l'obturateur 79 vers la position de dérivation à l'encontre de la pression du lubrifiant dans la première chambre. Il est configuré pour solliciter le déplacement de l'obturateur 79 vers la position de dérivation lorsque la pression du lubrifiant à l'entrée principale 71 est inférieure à une première valeur seuil. En particulier, la pression du lubrifiant est une valeur de pression du fluide dans la branche principale 62 en amont de l'échangeur thermique 20.

Le moyen de commande hydraulique 76 de l'obturateur comprend l'entrée de pressurisation 77 et le conduit de pressurisation 69. Il est configuré pour solliciter le déplacement de l'obturateur 79 vers la position principale d'ouverture lorsque la pression de lubrifiant à l'entrée principale 71 est supérieure à la première valeur seuil.

Le moyen élastique de sollicitation 78 de l'obturateur et le moyen de commande hydraulique 76 servent notamment à commander automatiquement le déplacement de l'obturateur par une commande hydromécanique vers la position de dérivation en cas de chute anormale de pression dans la branche principale 62 lors du vol de la turbomachine 1.

Le moyen de commande électrique 72, 74 de l'obturateur est configuré pour commander le déplacement de l'obturateur 79 vers la position principale d'ouverture ou la position de dérivation. Il est configuré pour commander le déplacement de l'obturateur 79 en régime transitoire du distributeur hydraulique 70.

Par régime transitoire du distributeur hydraulique 70, on entend une phase de fonctionnement transitoire du distributeur hydraulique 70. En d'autres termes, il s'agit d'une phase de fonctionnement pendant laquelle la position de l'obturateur 79 du distributeur hydraulique 70 n'est pas celle qu'il aurait dans un régime permanent de la turbomachine. Par régime stable du distributeur hydraulique 70, on entend une phase de fonctionnement sensiblement permanent du distributeur hydraulique 70. En d'autres termes, il s'agit d'un fonctionnement du distributeur hydraulique 70 pendant lequel la position de l'obturateur 79 du distributeur hydraulique 70 correspond à celle qu'il aurait dans un régime permanent de la turbomachine.

Le moyen de commande électrique 72, 74 de l'obturateur comprend un premier organe de commande électrique 72 de l'obturateur et un deuxième organe de commande électrique 74 de l'obturateur.

Le premier organe de commande électrique 72 de l'obturateur est configuré pour commander le déplacement de l'obturateur 79 vers la position principale d'ouverture à l'encontre de la commande de l'obturateur 79 par le moyen élastique de sollicitation 78 de l'obturateur, en particulier lorsque la pression du lubrifiant est inférieure à la première valeur seuil.

Le premier organe de commande électrique 72 de l'obturateur est notamment configuré pour déplacer l'obturateur 79 vers la position principale d'ouverture lorsque la température du lubrifiant est supérieure à une deuxième valeur seuil et que la pression du lubrifiant est susceptible d'être inférieure à la première valeur seuil.

Le premier organe de commande électrique 72 de l'obturateur sert par exemple à déplacer l'obturateur 79 vers la position principale d'ouverture dans un premier régime transitoire 201 de démarrage de la turbomachine 1 ou dans un troisième régime transitoire d'acheminement du lubrifiant vers l'échangeur thermique 20 correspondant.

Le deuxième organe de commande électrique 74 de l'obturateur est configuré pour commander le déplacement de l'obturateur 79 vers la position de dérivation à l'encontre de la commande du moyen de commande hydraulique 76, notamment lorsque la température du lubrifiant est inférieure à une deuxième valeur seuil.

Le deuxième organe de commande électrique 74 de l'obturateur est configuré pour arrêter l'alimentation en lubrifiant de la branche principale 62, lorsque la pression du lubrifiant est supérieure à la première valeur seuil et que la température du lubrifiant est inférieure à la deuxième valeur seuil. Une telle situation peut se produire en régime de croisière de la turbomachine 1.

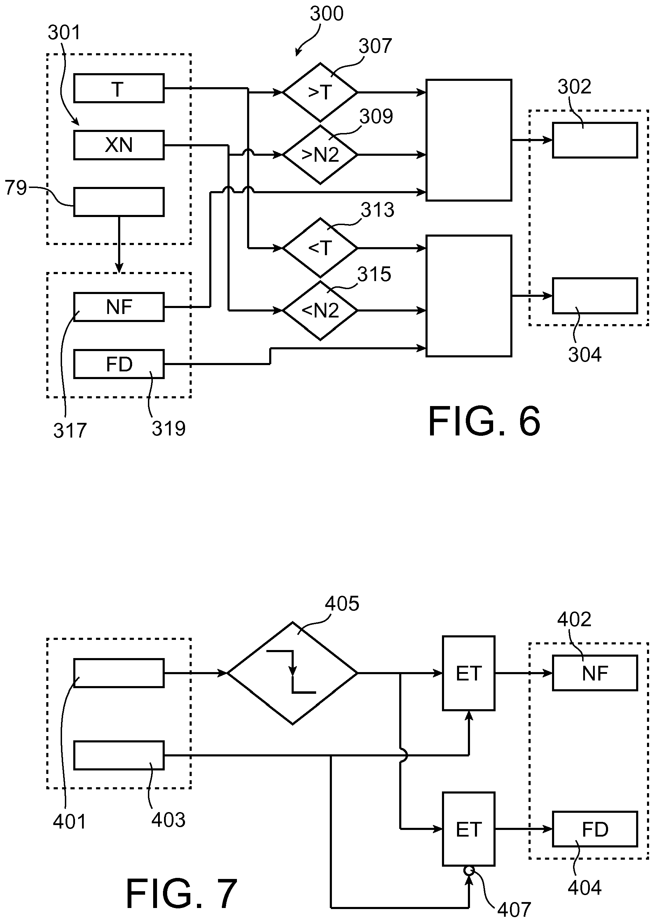

La figure 6 représente un procédé de commande 300 de la position de l'obturateur 79 de chaque distributeur hydraulique 70 à partir de paramètres de fonctionnement de la turbomachine.

Dans le mode de réalisation, la pression du lubrifiant à l'entrée principale 71 de chaque distributeur hydraulique 70 est supérieure à la première valeur seuil lorsque la valeur de rotation XN d'un arbre de turbomachine est supérieure à une troisième valeur seuil.

Les paramètres d'entrée 301 pris en compte pour la commande de chaque distributeur hydraulique 70 par le moyen de commande correspondant comprennent la température T du lubrifiant, la valeur de rotation XN d'un arbre du corps haute pression de la turbomachine 1, et la position de l'obturateur 79 du distributeur hydraulique parmi sa position principale d'ouverture et sa position de dérivation.

Le procédé de commande 300 de la position de l'obturateur 79 tient compte de l'absence de détection de fuite 317 dans la branche principale 62 de l'ensemble d'échange thermique 60, ou bien de la détection d'une fuite 319 dans la branche principale 62 de l'ensemble d'échange thermique 60.

Le moyen de commande de chaque obturateur 79 commande la position de l'obturateur 79 pour qu'il soit dans la position principale d'ouverture à l'étape 302, lorsque la température T du lubrifiant est supérieure à la deuxième valeur seuil à l'étape 307, et que la valeur de rotation XN de l'arbre de turbomachine est supérieure à la troisième valeur seuil à l'étape 309, et en l'absence de détection de fuite 317 dans la branche principale 62.

Le moyen de commande de chaque obturateur 79 commande la position de chaque obturateur 79 pour qu'il soit dans la position de dérivation à l'étape 304, lorsque la température T du lubrifiant est strictement inférieure à la deuxième valeur seuil à l'étape 313, ou bien lorsque la valeur de rotation de l'arbre de turbomachine est strictement inférieure à la troisième valeur seuil 315, ou bien lorsqu'une fuite de lubrifiant est détectée dans la branche principale 62 à l'étape de détection de fuite 319.

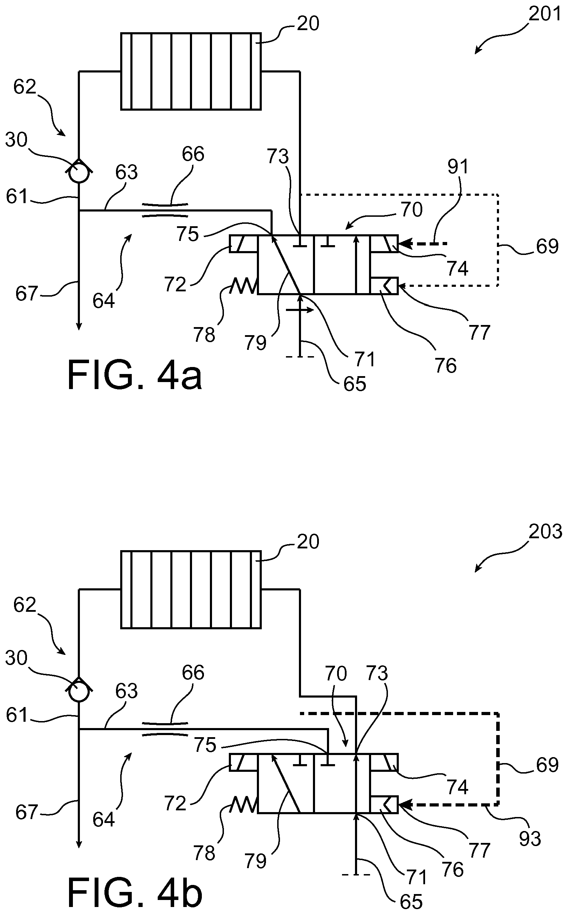

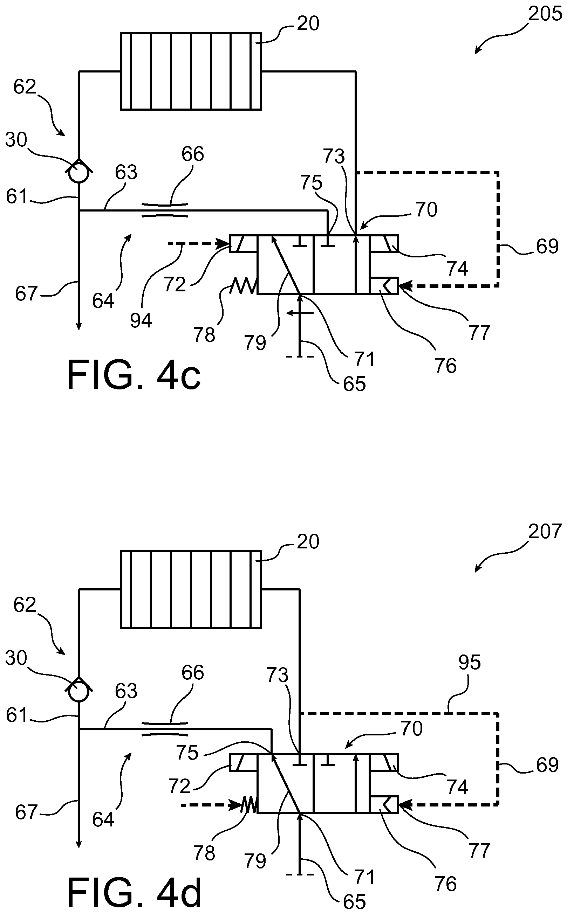

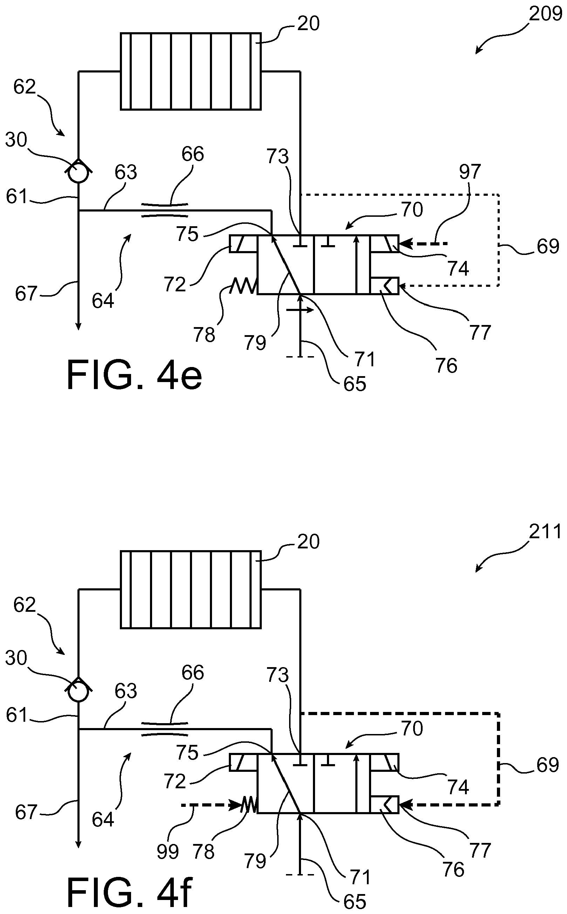

Le procédé de commande de chaque obturateur 79 de distributeur hydraulique 70 à partir du régime de la turbomachine 1 est maintenant décrit en référence aux figures 4a à 4f.

Au démarrage de la turbomachine, chaque distributeur hydraulique 70 est dans un premier régime transitoire de démarrage 201, dans lequel la pression du lubrifiant à l'entrée principale 71 est inférieure à la première valeur seuil et la température du lubrifiant est supérieure à la deuxième valeur seuil. La pression du lubrifiant dans le circuit d'alimentation 50 augmente au fur et à mesure que la vitesse de rotation de l'arbre du corps haute pression augmente. Le premier organe de commande électrique 72 commande le déplacement de l'obturateur 79 depuis la position de dérivation jusqu'à la position principale d'ouverture à l'encontre du moyen élastique de sollicitation 78 de l'obturateur. La commande électrique de position de l'obturateur 79 vers la position principale d'ouverture, selon la flèche 91, est maintenue par le premier organe de commande électrique 72 tant que la pression du lubrifiant n'est pas supérieure de manière stable à la première valeur seuil.

Dans un premier régime de vol avec refroidissement de la turbomachine, chaque distributeur hydraulique 70 est dans un premier régime stable de refroidissement 203, dans lequel la pression du lubrifiant à l'entrée principale 71 est supérieure à la première valeur seuil et la température du lubrifiant est supérieure à la deuxième valeur seuil. La position de l'obturateur 79 est commandée hydromécaniquement par le moyen de commande hydraulique 76 et le moyen élastique de sollicitation 78 de l'obturateur, selon la flèche 93. L'obturateur 79 est dans la position principale d'ouverture et le lubrifiant circule dans la branche principale 62 en étant refroidi dans l'échangeur thermique 20.

Lorsque la turbomachine 1 est en altitude et que la température du lubrifiant devient trop basse pour refroidir le lubrifiant dans les échangeurs thermiques 20, chaque distributeur hydraulique 70 est dans un deuxième régime transitoire de dérivation 205, dans lequel la température du lubrifiant devient inférieure à la deuxième valeur seuil. Le deuxième organe de commande électrique 74 commande le déplacement de l'obturateur 79 depuis position principale d'ouverture jusqu'à la position de dérivation à l'encontre du moyen de commande hydraulique 76 de l'obturateur 79. La commande électrique de position de l'obturateur 79 à la position de dérivation, selon la flèche 94, est maintenue par le deuxième organe de commande électrique 74 tant que la pression du lubrifiant n'est pas inférieure de manière stable à la première valeur seuil.

Dans un premier régime de vol avec refroidissement de la turbomachine, chaque distributeur hydraulique 70 est dans un deuxième régime stable de détournement 207 de lubrifiant, dans lequel la pression du lubrifiant à l'entrée principale 71 est inférieure à la première valeur seuil et la température du lubrifiant est inférieure à la deuxième valeur seuil. La position de l'obturateur 79 est commandée par commande hydromécanique, selon la flèche 95, par le moyen de commande hydraulique 76 et par le moyen élastique de sollicitation 78 de l'obturateur. L'obturateur 79 est dans la position de dérivation et le lubrifiant circule dans la branche de dérivation 64 sans être refroidi dans l'échangeur thermique 20.

Lorsque la turbomachine 1 baisse d'altitude et que le lubrifiant nécessite d'être refroidi dans les échangeurs thermiques 20, chaque distributeur hydraulique 70 est dans un troisième régime transitoire 209 d'acheminement du lubrifiant dans la branche principale 62, dans lequel la température du lubrifiant devient supérieure à la deuxième valeur seuil. Le premier organe de commande électrique 72 commande le déplacement de l'obturateur 79 depuis la position de dérivation jusqu'à la position principale d'ouverture à l'encontre du moyen élastique de sollicitation 78 de l'obturateur. La commande électrique de position de l'obturateur 79 à la position principale d'ouverture, selon la flèche 97, est maintenue par le premier organe de commande électrique 72 tant que la pression du lubrifiant n'est pas supérieure de manière stable à la première valeur seuil.

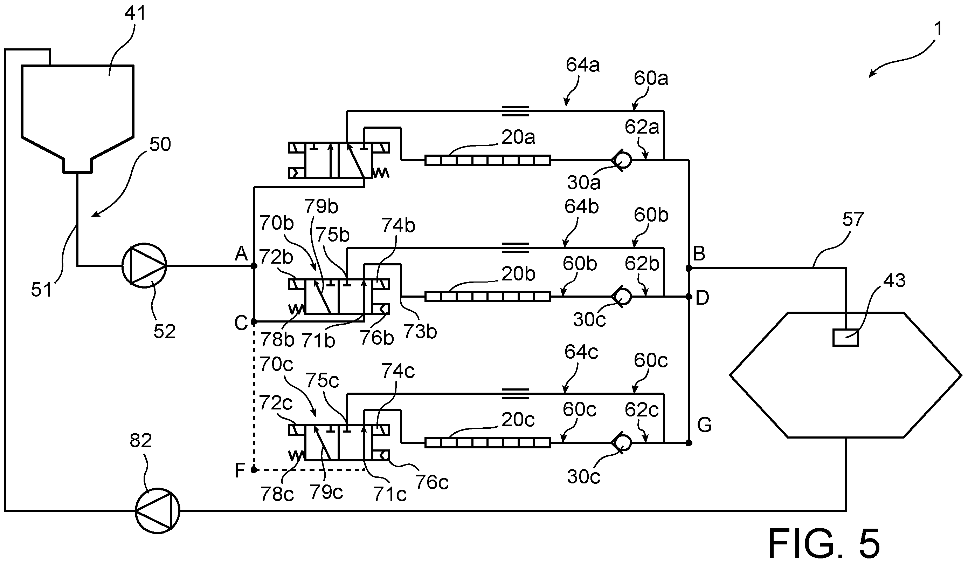

En référence plus spécifiquement à la figure 4f et à la figure 5, lorsqu'une fuite se produit dans la branche principale 62 d'un des ensembles d'échange thermique 60 défectueux en régime stable de la turbomachine et lorsque l'obturateur 79 est dans la position principale d'ouverture, le distributeur hydraulique 70 de l'ensemble d'échange thermique 60 défectueux bascule dans un régime de détournement d'urgence 211. La pression du lubrifiant baisse rapidement en dessous de la première valeur seuil, le moyen élastique de sollicitation 78 de l'obturateur commande le déplacement de l'obturateur 79 depuis la position principale d'ouverture jusqu'à la position de dérivation à l'encontre du moyen de commande hydraulique 76, selon la flèche 99. L'obturateur 79 de ce distributeur hydraulique 70 est ensuite bloqué dans la position de dérivation qui est la position de sécurité de l'obturateur 79 jusqu'à la fin du vol de la turbomachine 1. Le lubrifiant de cet ensemble d'échange thermique 60 circule entièrement dans la branche de dérivation 64 de l'ensemble d'échange thermique 60.

Du fait du diaphragme 66 de la branche de dérivation 64, la pression et le débit de lubrifiant restent inchangés dans les ensembles d'échange thermique qui sont agencés en parallèle de l'ensemble d'échange thermique 60 défectueux.

Le procédé de détection de fuite 400 de chaque obturateur 79 de distributeur hydraulique 70 est maintenant décrit en référence conjointe à la figure 2 et à la figure 7.

La turbomachine 1 comprend un système de contrôle de position de chaque obturateur et de détection de fuite. Ce système de contrôle de position de chaque obturateur 79 comporte des capteurs 92 et le système de régulation numérique 90 de turbomachine.

Les capteurs 92a, 92b, 92c sont configurés pour effectuer une mesure permettant au système de régulation numérique 90 de déterminer la position de chaque obturateur 79 de distributeur hydraulique. Chaque capteur 92a, 92b, 92c comprend par exemple un capteur linéaire de position de chaque obturateur qui est connu sous le nom de capteur « LVDT ».

Le système de régulation numérique 90 de turbomachine est également connu sous le nom de « FADEC ». Il comprend un calculateur numérique à deux voies redondantes et à pleine autorité. Il est configuré pour déterminer la position de chaque obturateur 79 à partir des mesures effectuées par les capteurs 92 et pour mettre en oeuvre le procédé de détection de fuite 400.

Le procédé de détection de fuite 400 comprend la détermination de la position de chaque obturateur 79 à l'étape 401, notamment par le système de régulation numérique 90 à partir des mesures effectuées par les capteurs 92a, 92b, 92c.

Le procédé de détection de fuite 400 comporte une étape 403 de vérification de la présence d'une commande électrique de déplacement de chaque obturateur 79 vers sa position de dérivation, par le deuxième organe de commande électrique 74 de l'obturateur.

Le procédé de détection de fuite 400 comprend la vérification d'un déplacement de position de chaque obturateur 79 depuis sa position principale d'ouverture jusqu'à sa position de dérivation, à l'étape 405.

Lorsqu'un obturateur 79 s'est déplacé depuis sa position principale d'ouverture jusqu'à sa position de dérivation suite à une commande électrique de déplacement de l'obturateur 79 vers sa position de dérivation, le procédé de de détection de fuite 400 détecte une absence de fuite dans la branche principale 62 de l'ensemble d'échange thermique 60 correspondant, à l'étape 402.

Lorsqu'un obturateur 79 s'est déplacé depuis sa position principale d'ouverture jusqu'à sa position de dérivation en l'absence de commande électrique de déplacement de l'obturateur 79 vers sa position de dérivation, le procédé de de détection de fuite 400 détecte une fuite dans la branche principale 62 de l'ensemble d'échange thermique 60 correspondant, à l'étape 404.

Grâce au distributeur hydraulique 70 de chaque ensemble thermique 60 selon l'invention, le débit et le refroidissement du lubrifiant sont aptes à être commandés et adaptés en fonction du régime de la turbomachine 1, tout en limitant l'impact de fuites dans la branche principale 62 et en facilitant la détection de fuite dans la branche principale 62.

L'obturateur 79 de chaque distributeur hydraulique 70 se déplace notamment automatiquement vers la position de dérivation par une commande hydromécanique, ce qui limite l'intervention du système de régulation numérique 90 de turbomachine pour isoler l'échangeur thermique 20 en cas de fuite de l'échangeur thermique 20.

Bien entendu, diverses modifications peuvent être apportées par l'homme du métier à l'invention qui vient d'être décrite sans sortir du cadre de l'exposé de l'invention.

En variante, la turbomachine 1 est un turbomoteur ou un turbopropulseur.

En variante, le fluide est du carburant. Le circuit de fluide 40 est alors un circuit de carburant pour turbomachine 1.

Chacune des branches principales 62 et chacune des branches de dérivation 64 est de structure variable. En particulier, l'agencement, le nombre et la nature des éléments résistifs hydrauliques dans le circuit de lubrification 40 peut varier.

La structure de chacune de chacun des éléments résistifs hydrauliques 66 du système de lubrification peut varier. Par exemple, chacun de ces éléments résistifs hydrauliques 66 peut comporter un échangeur thermique, un filtre, une vanne de coupure et /ou un débitmètre.

Le nombre d'échangeurs thermiques 20 de chaque branche principale 62 peut varier. Chaque branche principale 62 peut comporter au moins un filtre ou un autre type d'élément résistif hydraulique.

Chaque branche de dérivation 64 peut comprendre au moins un échangeur thermique.

En variante, le circuit d'alimentation 50 peut comprendre au moins deux ensembles d'échanges thermiques 60 qui sont agencés en série.

La structure de chaque distributeur hydraulique 70 peut varier, notamment tant que chaque distributeur hydraulique 70 laisse circuler du lubrifiant dans la branche principale 62 au moins pour certains régimes de fonctionnement de la turbomachine 1, et qu'il dirige le lubrifiant vers la branche de dérivation 64 dans d'autres régimes de fonctionnement de la turbomachine 1 et en cas de fuite.

En variante, au moins un des distributeurs hydrauliques 70 est à commande pneumatique au moins en régime stable de la turbomachine.

En variante, au moins un des distributeurs hydrauliques 70 comprend au moins une position d'ouverture stable entre la position principale d'ouverture et la position de dérivation, dans laquelle l'obturateur 79 du distributeur hydraulique alimente partiellement la branche principale 62 correspondante et partiellement la branche de dérivation 64 correspondante.

Au moins un des distributeurs hydrauliques 70 peut comprendre une pluralité de positions d'ouverture stable entre la entre la position principale d'ouverture et la position de dérivation, par exemple une continuité de positions d'ouverture stable ou une suite de positions d'ouvertures stables discrètes.

Plus généralement, chaque distributeur hydraulique 70 peut être un autre type de distributeur qu'un distributeur hydraulique trois voies, deux positions.

En variante, l'obturateur 79 de chaque distributeur hydraulique peut comprendre un clapet au lieu d'un tiroir.

Les distributeurs hydrauliques 70 peuvent être de structure différente les uns des autres.

Selon une variante de réalisation, le dispositif de surveillance de position de chaque obturateur est par exemple configuré pour déterminer une pression de lubrifiant dans la branche principale 62, par exemple au moyen d'un premier capteur de pression 92, et pour déterminer une pression de lubrifiant dans la branche de dérivation 64, par exemple au moyen d'un deuxième capteur de pression 92. Le dispositif de surveillance peut surveiller la position de l'obturateur 79 en comparant la valeur de pression de lubrifiant dans la branche principale 62 et la valeur de pression de lubrifiant dans la branche de dérivation 64.

## Revendications

1. Ensemble (60) pour circuit de fluide (40) de turbomachine (1), comprenant :
une branche principale (62) comprenant un échangeur thermique (20),
une branche de dérivation (64) qui est agencée en parallèle de la branche principale (62) et un distributeur (70) de fluide vers l'échangeur thermique (20), le distributeur (70) de fluide comprenant :
une entrée (71) de fluide,
une sortie principale (73) de fluide qui est raccordée fluidiquement à la branche principale (62),
une sortie de dérivation (75) de fluide qui est raccordée fluidiquement à la branche de dérivation (64),
un obturateur (79) qui est mobile entre une position principale d'ouverture dans laquelle il obture la sortie de dérivation (75) et il laisse circuler du fluide dans la branche principale (62), et une position de dérivation dans laquelle il obture la sortie principale (73) et il laisse circuler du fluide dans la branche de dérivation (64), l'ensemble étant **caractérisé en ce que** le distributeur de fluide (70) comprend
un moyen élastique de sollicitation (78) de l'obturateur qui est configuré pour solliciter le déplacement de l'obturateur (79) pour qu'il obture la sortie principale (73) lorsqu'une valeur de pression de fluide est inférieure à une première valeur seuil, et
un moyen de commande électrique (72, 74) de l'obturateur configuré pour solliciter le déplacement de l'obturateur (79) vers la position principale d'ouverture ou la position de dérivation.

2. Ensemble (60) pour turbomachine (1) selon la revendication précédente, dans lequel le moyen de commande électrique (72, 74) de l'obturateur comprend un premier organe de commande électrique (72) de l'obturateur qui est configuré pour solliciter l'obturateur (79) vers la position principale d'ouverture, notamment lorsque la valeur de pression du fluide est inférieure à la première valeur seuil.

3. Ensemble (60) pour turbomachine (1) selon l'une quelconque des revendications précédentes, dans lequel le moyen de commande électrique (72, 74) de l'obturateur comprend un deuxième organe de commande électrique (74) de l'obturateur qui est configuré pour solliciter l'obturateur (79) vers la position de dérivation, notamment lorsque la température du fluide est inférieure à une deuxième valeur seuil.

4. Ensemble (60) pour turbomachine (1) selon l'une quelconque des revendications précédentes, dans lequel le distributeur (70) de fluide comprend une première chambre et une deuxième chambre qui sont séparées l'une de l'autre par l'obturateur (79),
le distributeur (70) de fluide comprenant une entrée de pressurisation (77) pour amener du fluide dans la première chambre,
le moyen élastique de sollicitation (78) comprenant un ressort de rappel qui est configuré pour solliciter le déplacement de l'obturateur (79) vers la position de dérivation à l'encontre de la pression du fluide dans la première chambre.

5. Ensemble (60) pour turbomachine (1) selon l'une quelconque des revendications précédentes, dans lequel la branche principale (62) comprend un dispositif anti-retour (30) qui est configuré pour limiter/empêcher la circulation de fluide vers l'échangeur thermique (20) lorsque l'obturateur (79) est dans la position de dérivation, le dispositif anti-retour (30) comprenant de préférence un clapet anti-retour.

6. Ensemble (60) pour turbomachine (1) selon l'une quelconque des revendications précédentes, dans lequel la branche de dérivation (64) comprend un élément résistif hydraulique (66) qui est conçu pour qu'une valeur de résistance hydraulique dans la branche de dérivation (64) soit sensiblement égale à une valeur de résistance hydraulique dans la branche principale (62),
l'élément résistif hydraulique (66) comprenant de préférence un diaphragme.

7. Ensemble (60) pour turbomachine (1) selon l'une des revendications 3-6,
dans lequel l'obturateur (79) du distributeur de fluide est dans la position principale d'ouverture lorsqu'une température du fluide est supérieure à la deuxième valeur seuil, lorsqu'une valeur de rotation d'un arbre de turbomachine est supérieure à une troisième valeur seuil, et qu'aucune fuite de fluide n'est détectée dans la branche principale (62), et/ou
dans lequel l'obturateur (79) du distributeur de fluide est dans la position de dérivation lorsque la température du fluide est strictement inférieure à la deuxième valeur seuil, ou lorsque la valeur de rotation d'un arbre de turbomachine est strictement inférieure à la troisième valeur seuil, ou lorsqu'une fuite de fluide est détectée dans la branche principale (62).

8. Ensemble (60) pour turbomachine (1) selon l'une quelconque des revendications précédentes, dans lequel la position de l'obturateur (79) du distributeur de fluide est commandée par une commande électrique en régime transitoire du distributeur (70) de fluide,
la position de l'obturateur (79) du distributeur de fluide étant notamment commandée par une commande hydromécanique en régime stable du distributeur (70) de fluide.

9. Ensemble (60) pour turbomachine (1) selon l'une quelconque des revendications précédentes, dans lequel le distributeur (70) de fluide comprend une position de sécurité dans laquelle l'obturateur (79) est dans la position de dérivation, l'obturateur (79) étant bloqué dans la position de sécurité lorsque l'obturateur (79) s'est déplacé de la position principale d'ouverture vers la position de dérivation par une commande hydromécanique de l'obturateur (79).

10. Ensemble (60) pour turbomachine (1) selon l'une quelconque des revendications précédentes, comprenant un détecteur de fuite (90) configuré pour détecter une fuite dans la branche principale (62) lorsque l'obturateur (79) du distributeur de fluide se déplace depuis la position principale d'ouverture vers la position de dérivation en l'absence de commande électrique de déplacement de l'obturateur (79) vers la position de dérivation.

11. Ensemble (60) pour turbomachine (1) selon l'une quelconque des revendications précédentes, comprenant un secteur aubagé (12) de stator, l'échangeur thermique (20) étant situé dans le secteur aubagé (12) de stator,
le secteur aubagé (12) de stator comportant de préférence comporte des aubes (14) de redressement d'un flux secondaire de turbomachine (1),
le secteur aubagé (12) comprenant de préférence une plateforme radialement interne (13), une plateforme radialement externe (15) et au moins une pale qui s'étend entre la plateforme radialement interne (13) et la plateforme radialement externe (15).

12. Circuit de fluide (40) pour turbomachine (1), comprenant un premier ensemble (60a) selon l'une quelconque des revendications précédentes et un deuxième ensemble (60b) selon l'une quelconque des revendications précédentes, dans lequel le deuxième ensemble (60b) est agencé fluidiquement en parallèle du premier ensemble (60a).

## Patentansprüche

1. Anordnung (60) für einen Fluidkreislauf (40) eines Turbinentriebwerks (1), die Folgendes umfasst:
einen Hauptzweig (62), der einen Wärmetauscher (20) umfasst,
einen Umleitungszweig (64), der parallel zum Hauptzweig (62) angeordnet ist, und
einen Fluidverteiler (70) zum Wärmetauscher (20) hin, wobei der Fluidverteiler (70) Folgendes umfasst:
einen Flüssigkeitseinlass (71),
einen Hauptfluidauslass (73), der mit dem Hauptzweig (62) strömungstechnisch verbunden ist,
einen Fluidumleitungsauslass (75), der mit einem Umleitungszweig (64) strömungstechnisch verbunden ist,
eine Verschlussvorrichtung (79), die zwischen einer Hauptöffnungsposition, in der sie den Umleitungsauslass (75) verschließt und das Fluid im Hauptzweig (62) zirkulieren lässt, und einer Umleitungsposition, in der sie den Hauptauslass (73) verschließt und das Fluid im Umleitungszweig (64) zirkulieren lässt, beweglich ist, wobei die Anordnung **dadurch gekennzeichnet ist, dass** der Fluidverteiler (70)
ein elastisches Vorspannmittel (78) für die Verschlussvorrichtung, das dazu konfiguriert ist, die Verschiebung der Verschlussvorrichtung (79) so vorzuspannen, dass es den Hauptauslass (73) verschließt, wenn ein Fluiddruckwert niedriger als ein erster Schwellenwert ist, und
ein elektrisches Steuermittel (72, 74) für die Verschlussvorrichtung umfasst, das dazu konfiguriert ist, die Verschiebung der Verschlussvorrichtung (79) in Richtung der Hauptöffnungsposition oder der Umleitungsposition vorzuspannen.

2. Anordnung (60) für ein Turbinentriebwerk (1) nach dem vorhergehenden Anspruch, wobei das elektrische Steuermittel (72, 74) für die Verschlussvorrichtung ein erstes elektrisches Steuerelement (72) für die Verschlussvorrichtung umfasst, das dazu konfiguriert ist, die Verschlussvorrichtung (79) in Richtung der Hauptöffnungsposition vorzuspannen, insbesondere wenn der Fluiddruckwert niedriger als der erste Schwellenwert ist.

3. Anordnung (60) für ein Turbinentriebwerk (1) nach einem der vorhergehenden Ansprüche, wobei das elektrische Steuermittel (72, 74) für die Verschlussvorrichtung ein zweites elektrisches Steuerelement (74) für die Verschlussvorrichtung umfasst, das dazu konfiguriert ist, die Verschlussvorrichtung (79) in Richtung der Umleitungsposition vorzuspannen, insbesondere wenn die Fluidtemperatur niedriger als ein zweiter Schwellenwert ist.

4. Anordnung (60) für ein Turbinentriebwerk (1) nach einem der vorhergehenden Ansprüche, wobei der Fluidverteiler (70) eine erste Kammer und eine zweite Kammer umfasst, die durch die Verschlussvorrichtung (79) voneinander getrennt sind,
wobei der Fluidverteiler (70) einen Druckbeaufschlagungseinlass (77) umfasst, um das Fluid in die erste Kammer zu bringen,
wobei das elastische Vorspannmittel (78) eine Rückstellfeder umfasst, die dazu konfiguriert ist, die Verschiebung der Verschlussvorrichtung (79) in Richtung der Umleitungsposition gegen den Druck des Fluids in der ersten Kammer vorzuspannen.

5. Anordnung (60) für ein Turbinentriebwerk (1) nach einem der vorhergehenden Ansprüche, wobei der Hauptzweig (62) eine Rücklaufsperrvorrichtung (30) umfasst, die dazu konfiguriert ist, die Zirkulation von Fluid in Richtung des Wärmetauschers (20) zu begrenzen/verhindern, wenn sich die Verschlussvorrichtung (79) in der Umleitungsposition befindet, wobei die Rücklaufsperrvorrichtung (30) vorzugsweise ein Rückschlagventil umfasst.

6. Anordnung (60) für ein Turbinentriebwerk (1) nach einem der vorhergehenden Ansprüche, wobei der Umleitungszweig (64) ein hydraulisches Widerstandselement (66) umfasst, das so ausgelegt ist, dass ein hydraulischer Widerstandswert im Umleitungszweig (64) im Wesentlichen gleich einem hydraulischen Widerstandswert im Hauptzweig (62) ist,
wobei das hydraulische Widerstandselement (66) vorzugsweise eine Membran umfasst.

7. Anordnung (60) für ein Turbinentriebwerk (1) nach einem der Ansprüche 3-6, wobei sich die Verschlussvorrichtung (79) des Fluidverteilers in der Hauptöffnungsposition befindet, wenn eine Temperatur des Fluids größer als der zweite Schwellenwert ist, wenn ein Wert der Drehung einer Turbinentriebwerkswelle größer als ein dritter Schwellenwert ist und im Hauptzweig (62) keine Fluidleckage erkannt wird, und/oder
wobei sich die Verschlussvorrichtung (79) des Fluidverteilers in der Umleitungsposition befindet, wenn die Temperatur des Fluids strikt niedriger als der zweite Schwellenwert ist oder wenn der Wert der Drehung einer Turbinentriebwerkswelle strikt kleiner als der dritte Schwellenwert ist oder wenn im Hauptzweig (62) eine Fluidleckage erkannt wird.

8. Anordnung (60) für ein Turbinentriebwerk (1) nach einem der vorhergehenden Ansprüche, wobei die Position der Verschlussvorrichtung (79) des Fluidverteilers durch eine elektrische Steuerung im Übergangszustand des Fluidverteilers (70) gesteuert wird,
wobei die Position der Verschlussvorrichtung (79) des Fluidverteilers insbesondere durch eine hydromechanische Steuerung im stationären Zustand des Fluidverteilers (70) gesteuert wird.

9. Anordnung (60) für ein Turbinentriebwerk (1) nach einem der vorhergehenden Ansprüche, wobei der Fluidverteiler (70) eine Sicherheitsposition umfasst, in der die Verschlussvorrichtung (79) sich in der Umleitungsposition befindet, wobei die Verschlussvorrichtung (79) in der Sicherheitsposition blockiert wird, wenn die Verschlussvorrichtung (79) sich von der Hauptöffnungsposition in Richtung der Umleitungsposition durch eine hydromechanische Steuerung der Verschlussvorrichtung (79) verschiebt.

10. Anordnung (60) für ein Turbinentriebwerk (1) nach einem der vorhergehenden Ansprüche, umfassend einen Leckagedetektor (90), der dazu konfiguriert ist, eine Leckage im Hauptzweig (62) zu detektieren, wenn die Verschlussvorrichtung (79) des Fluidverteilers sich von der Hauptöffnungsposition in Richtung der Umleitungsposition verschiebt, wenn keine elektrische Steuerung für die Verschiebung der Verschlussvorrichtung (79) in Richtung der Umleitungsvorrichtung vorhanden ist.

11. Anordnung (60) für ein Turbinentriebwerk (1) nach einem der vorhergehenden Ansprüche, umfassend einen beschaufelten Statorbereich (12), wobei sich der Wärmetauscher (20) im beschaufelten Statorbereich (12) befindet,
wobei der beschaufelte Statorbereich (12) vorzugsweise Schaufeln (14) zum Begradigen einer Sekundärströmung eines Turbinentriebwerks (1) umfasst,
wobei der beschaufelte Bereich (12) vorzugsweise eine radial innere Plattform (13), eine radial äußere Plattform (15) und mindestens ein Schaufelblatt umfasst, das sich zwischen der radial inneren Plattform (13) und der radial äußeren Plattform (15) erstreckt.

12. Fluidkreislauf (40) für ein Turbinentriebwerk (1), umfassend eine erste Anordnung (60a) nach einem der vorhergehenden Ansprüche und eine zweite Anordnung (60b) nach einem der vorhergehenden Ansprüche, wobei die zweite Anordnung (60b) strömungstechnisch parallel zur ersten Anordnung (60a) angeordnet ist.

## Claims

1. An assembly (60) for a fluid circuit (40) of a turbine engine (1), comprising:
a main branch (62) comprising a heat exchanger (20),
a bypass branch (64) which is arranged parallel to the main branch (62),
a control valve (70) of fluid to the heat exchanger (20), the fluid control valve (70) comprising:
a fluid inlet (71),
a main fluid outlet (73) which is fluidly connected to the main branch (62),
a fluid bypass outlet (75) which is fluidly connected to the bypass branch (64),
a shutter (79) which is movable between a main open position in which it closes the bypass outlet (75) and it allows circulating the fluid in the main branch (62), and a bypass position in which it closes the main outlet (73) and it allows circulating the fluid in the bypass branch (64), the assembly being **characterized in that** the control valve (70) comprises :
resilient means (78) for biasing the shutter which is configured to bias the displacement of the shutter (79) so that it closes the main outlet (73) when a fluid pressure value is lower than a first threshold value, and
means (72, 74) for electrically controlling the shutter configured to bias the displacement of the shutter (79) to the main open position or the bypass position.

2. The assembly (60) for a turbine engine (1) according to the preceding claim, wherein the means (72, 74) for electrically controlling the shutter comprises a first member (72) for electrically controlling the shutter which is configured to bias the shutter (79) to the main open position, in particular when the pressure value of the fluid is lower than the first threshold value.

3. The assembly (60) for a turbine engine (1) according to any one of the preceding claims, wherein the means (72, 74) for electrically controlling the shutter comprises a second member (74) for electrically controlling the shutter which is configured to bias the shutter (79) towards the bypass position, in particular when the fluid temperature is lower than a second threshold value.

4. The assembly (60) for a turbine engine (1) according to any one of the preceding claims, wherein the fluid control valve (70) comprises a first chamber and a second chamber which are separated from each other by the shutter (79),
the fluid control valve (70) comprising a pressurisation inlet (77) for bringing the fluid into the first chamber,
the resilient biasing means (78) comprising a return spring which is configured to bias the displacement of the shutter (79) to the bypass position against the pressure of the fluid in the first chamber.

5. The assembly (60) for a turbine engine (1) according to any one of the preceding claims, wherein the main branch (62) comprises a check device (30) which is configured to limit/prevent the circulation of fluid to the heat exchanger (20) when the shutter (79) is in the bypass position, the check device (30) preferably comprising a check valve.

6. The assembly (60) for a turbine engine (1) according to any one of the preceding claims, wherein the bypass branch (64) comprises a hydraulic resistive element (66) which is designed so that a hydraulic resistance value in the bypass branch (64) is substantially equal to a hydraulic resistance value in the main branch (62),
the hydraulic resistive element (66) preferably comprising a diaphragm.

7. The assembly (60) for a turbine engine (1) according to any one of the claims 3-6, wherein the shutter (79) of the fluid control valve is in the main open position when a temperature of the fluid is greater than the second threshold value, when a value of rotation of a turbine engine shaft is greater than a third threshold value, and no fluid leak is detected in the main branch (62), and/or
wherein the shutter (79) of the fluid control valve is in the bypass position when the temperature of the fluid is strictly lower than the second threshold value, or when the value of rotation of a turbine engine shaft is strictly lower than the third threshold value, or when a fluid leak is detected in the main branch (62).

8. The assembly (60) for a turbine engine (1) according to any one of the preceding claims, wherein the position of the shutter (79) of the fluid control valve is controlled by an electrical control in transient state of the fluid control valve (70),
the position of the shutter (79) of the fluid control valve being in particular controlled by a mechanical hydraulic control in steady state of the fluid control valve (70).

9. The assembly (60) for a turbine engine (1) according to any one of the preceding claims, wherein the fluid control valve (70) comprises a safety position in which the shutter (79) is in the bypass position, the shutter (79) being blocked in the safety position when the shutter (79) is displaced from the main open position to the bypass position by a mechanical hydraulic control of the shutter (79).

10. The assembly (60) for a turbine engine (1) according to any one of the preceding claims, comprising a leak detector (90) configured to detect a leak in the main branch (62) when the shutter (79) of the fluid control valve has been displaced from the main open position to the bypass position in the absence of electrical control of displacement of the shutter (79) to the bypass position.

11. The assembly (60) for a turbine engine (1) according to any one of the preceding claims, comprising a bladed stator sector (12), the heat exchanger (20) being located in the bladed stator sector (12),
the bladed stator sector (12) preferably including blades (14) for straightening a secondary flow of a turbine engine (1),
the bladed sector (12) preferably comprising a radially inner platform (13), a radially outer platform (15) and at least one vane which extends between the radially inner platform (13) and the radially outer platform (15).

12. A fluid circuit (40) for a turbine engine (1), comprising a first assembly (60a) according to any one of the preceding claims and a second assembly (60b) according to any one of the preceding claims, wherein the second assembly (60b) is arranged fluidly in parallel with the first assembly (60a).
